Europäisches Patentamt

European Patent Office

Office européen des brevets

(19)

(11) Veröffentlichungsnummer : **0 406 621 B1**

(12)                 # EUROPÄISCHE PATENTSCHRIFT

(45) Veröffentlichungstag der Patentschrift :
23.12.92 Patentblatt 92/52

(51) Int. Cl.$^5$ : **A23C 1/12, A23C 3/03**

(21) Anmeldenummer : **90111711.9**

(22) Anmeldetag : **21.06.90**

(54) **Verfahren zur Herstellung von Kondensmilch.**

(30) Priorität : **07.07.89 DE 3922394**

(43) Veröffentlichungstag der Anmeldung :
**09.01.91 Patentblatt 91/02**

(45) Bekanntmachung des Hinweises auf die
Patenterteilung :
**23.12.92 Patentblatt 92/52**

(84) Benannte Vertragsstaaten :
**AT BE CH DE DK ES FR GB IT LI LU NL SE**

(56) Entgegenhaltungen :
**BE-A- 571 931**
**DE-A- 3 726 487**
**NL-A- 8 300 088**

(56) Entgegenhaltungen :
**ZUIVELZICHT vol. 74, no. 2, 1982, Seiten 48 -
51; L.G.W. VAN DER LOO: "In doorstroming
gesteriliseerde en aseptisch verpaktekoffiemelk (1)"**
**AGRICULTURAL AND FOOD CHEMISTRY vol.
4, no. 12, Dezember 1956, Seiten 1033 - 1035;
N.P.TARASSUK: "Milk Sterilization: Controlof
Gelation in Evaporated Milk"**

(73) Patentinhaber : **PKL Verpackungssysteme
GmbH**
**Kennedydamm 15-17**
**W-4000 Düsseldorf 30 (DE)**

(72) Erfinder : **Witter, Karl-Theo**
**Sebastianusstrasse 3**
**W-5172 Linnich (DE)**

(74) Vertreter : **Cohausz & Florack Patentanwälte**
**Postfach 14 01 61 Schumannstrasse 97**
**W-4000 Düsseldorf 1 (DE)**

EP 0 406 621 B1

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung bezieht sich auf ein Verfahren zur Herstellung von Kondensmilch, vorzugsweise mit 7,5 % Fett und einer freien Trockenmasse mit 17,5 % Fett, durch folgende Verfahrensschritte:

1. Vorerhitzen der Ausgangsmilch auf eine Temperatur von 120° bis 130° C für eine Zeitdauer von 2 bis 8 Minuten, insbesondere 4 Minuten,
2. Eindampfen der Ausgangsmilch,
3. Homogenisieren der eingedampften Milch,
4. Hocherhitzen der eingedampften Milch auf eine Temperatur von 120° bis 130° C für eine Zeitdauer von 4 bis 8 Minuten, insbesondere 6 Minuten.

Unter Kondensmilch versteht man ein Milchprodukt, das durch Wasserentzug (Eindampfung) von Milch (Ausgangsmilch) auf bestimmte, vom Gesetzgeber zugelassene Werte eingestellt wird.

In der Bundesrepublik Deutschland werden hauptsächlich folgende Kondensmilchsorten hergestellt:

1. Kondensmilch mit hohem Fettgehalt, z.B. 10 % Fett und 23 % fettfreier Trockenmasse = 33 % Gesamttrockenmasse,
2. Kondensmilch mit 7,5 % Fett und 17,5 % fettfreier Trockenmasse = 25 % Gesamttrockenmasse,
3. Kondensmilch mit 4 % Fett und 20 % fettfreier Trockenmasse = 24 % Gesamttrockenmasse.

Bei der Herstellung und Lagerung von Kondensmilch kommt es durch Gerinnung des Eiweißes bzw. Ausflockung und/oder Gelierung häufig zu Qualitätsänderungen. Aufgrund dieser Erscheinungen setzt man grundsätzlich Stabilisatoren zu, deren Art und Menge vom Gesetzgeber vorgegeben sind.

In der Bundesrepublik Deutschland sind gemäß der Verordnung über Milcherzeugnisse derzeit folgende Zusatzstoffe als Stabilisatoren zugelassen:

1. Für ungezuckerte Kondensmilcherzeugnisse:

Natrium-Kaliumhydrogencarbonat, Calziumchlorid,

E 331 Natriumcitrat, E 332 Kaliumcitrat,

E 339 Natriumorhtophosphat, E 340 Kaliumorthophosphat,

E 450 a Natrium- und Kaliumdiphosphat.

2. Für ultrahocherhitzte ungezuckerte Kondensmilcherzeugnisse:

Neben den unter 1. genannten Zusatzstoffen

E 450 b Natrium- und Kaliumtriphosphate und

E 450 c Natrium- und Kaliumpolyphosphate.

Bei H-Kaffeesahne ist es bekannt, sowohl Stabilisierungsmittel zuzusetzen als auch ohne solche Stabilisierungsmittel auszukommen. Der wesentliche Unterschied zwischen der H-Kaffeesahne und der Kondensmilch besteht darin, daß die Kaffeesahne eine fettfreie Trockenmasse von ca. 7 % hat. Demgegenüber liegt die Kondensmilch mit einer niedrigsten Trockenmasse von mindestens 17,5 % 2,5 mal höher.

Um nach der Eindampfung der Ausgangsmilch die jeweils richtigen Werte zu erhalten, wird die Ausgangsmilch vorzugsweise über den Fettgehalt eingestellt. So wird beispielsweise bei einer Kondensmilch mit 7,5 % Fett bei einer angenommenen fettfreien Trockenmasse von 8,5 % der Fettgehalt auf 3,65 % Fett eingestellt. Der Eindampfungsgrad beträgt 2,06:1. Die nötigen Korrekturen werden am Konzentrat vorgenommen.

Die weitere Verarbeitung erfolgt auf verschiedene Weise. So wird für die Abfüllung der Milch in Gebinde, wie Dosen, Flaschen oder dergleichen mit anschließender Sterilisierung im Autoklaven die Ausgangsmilch bei 100 bis 110° C ca. ein bis zwei Minuten vorerhitzt und bei 60 bis 70° mit 100 bis 200 bar je nach Fettstufe homogenisiert. Anschließend erfolgt die Eindickung bei 70 bis 75° C.

Bevor die Kondensmilch abgefüllt und sterilisiert wird, wird eine Probesterilisation durchgeführt. Dabei werden z.B. Dosen mit unterschiedlichen Mengen von Stabilisierungssalzen beimpft und ca. 20 bis 22 Minuten bei ca. 120° C sterilisiert. Nach diesem Prozeß kann man erkennen, welche Mengen an Stabilisationssalzen benötigt werden. Das Kriterium dabei ist die Eiweißgerinnung. (Das Große Molkerei-Lexikon von Prof.Dr.-Ing.M.E.Schulz und Dr.E.Voss, Volkswirtschaftlicher Verlag GmbH, Kempten/ Allgäu, 1965, Seite 599 bis 602: Verfahren 1).

Nach einem anderen Verfahren erfolgt eine kontinuierliche Erhitzung und Heißhaltung mit anschließender aseptischer Abfüllung. In diesem Fall erfolgt eine Vorerhitzung der Ausgangsmilch bei ca. 120° C für etwa zwei Minuten. Die Eindampfung der Milch erfolgt bei ca. 70° C. Je nach Weiterverarbeitung erfolgt die Kühlung des Konzentrates bis auf 4° C. Die Stabilisierungssalze werden entweder kontinuierlich bei der Eindampfung zugegeben oder in dem Konzentrattank. Anschließend erfolgt über zwei Minuten lang eine Erhitzung auf ca. 128° C. Danach erfolgt die Kühlung und die Abfüllung (DE-OS 37 26 487; Das Große Molkerei-Lexikon, Seite 601: Verfahren 3).

Bei einem anderen bekannten Verfahren, von dem das erfindungsgemäße Verfahren ausgeht, erfolgt wie bei dem zuletzt beschriebenen Verfahren vor der Eindampfung eine Vorerhitzung mit einer solchen Temperatur, daß die Milch sterilisiert und die Molkenproteine denaturiert werden. Nach dem Eindampfen erfolgen eine Erhitzung zum Zwecke der Sterilisation und danach eine Homogenisierung. Die Homogenisierung nach der Sterilisation wird gegenüber einer umgekehrten Reihenfolge aus Gründen der Stabilisierung des Produktes und der Erhaltung von Aromastoffen bevorzugt (US-PS 31 05 763).

Der Erfindung liegt die Aufgabe zugrunde, ein Verfahren zum Herstellung von Kondensmilch vorzuschlagen, das ohne Zusatz von Stabilisatoren der Kondensmilch eine hohe Stabilität verleiht, wobei insbesondere sichergestellt ist, daß es nicht zu einer Koagulation oder Gelierung des Milcheiweißes kommt.

Diese Aufgabe wird bei einem Verfahren der eingangs genannten Art dadurch gelöst, daß die Homogenisierung der eingedampften Milch in zwei Stufen mit einem höheren Druck in der ersten Stufe erfolgt, wobei die Hocherhitzung erst nach der ersten Stufe erfolgt.

Die Erfindung beruht auf der Erkenntnis, daß für die Stabilität der Kondensmilch es nicht nur auf die Temperatur und die Dauer der Erhitzung der Ausgangsmilch und/oder der eingedampften Milch, sondern entscheidend auch auf die Art der Homogenisierung ankommt. Vor allem wird durch die zweistufige Homogenisierung mit der eingeschalteten Hocherhitzung die Bildung von Freifett, welches die Flockenbildung fördert, reduziert. Die nach dem erfindungsgemäßen Verfahren hergestellte Milch hat außerdem eine helle Farbe und einen sehr milden Geschmack.

Gute Erfahrungen hat man bei der Durchführung des Verfahrens gemacht, wenn der Druck in der ersten Stufe 100 bis 150 bar, insbesondere 120 bar, und in der zweiten Stufe 40 bis 60 bar, insbesondere 50 bar, beträgt. Die eingedampfte Milch sollte vor der ersten Stufe der Homogenisierung auf 90,5° C für eine Zeit von 3,5 Minuten erhitzt werden.

Erfahrungen mit nach dem erfindungsgemäßen Verfahren hergestellter Kondensmilch haben gezeigt, daß sie sich zum aseptischen Abfüllen in aus einem Karton-Kunststoffverbund bestehende Packungen eignet.

Die vorteilhaften Wirkungen der Kondensmilch nach der Erfindung sind anhand von Versuchen bestätigt worden.

Beispielhaft wird dies an dem nachfolgend aufgeführten Versuch dargelegt:

## V E R S U C H

## Parameter

### Vorerhitzung der Milch

| | | |
|---|---|---|
| 1. Erhitzer | : | $88^{\circ}$ C / 30 Sekunden |
| 2. Erhitzer | : | $100^{\circ}$ C / 30 Sekunden |
| 3. Erhitzer | : | $125^{\circ}$ C /180 Sekunden |

### Eindampfung

| | | |
|---|---|---|
| 4 Entspannerstufen | : | $118^{\circ}$ C bis $86^{\circ}$ C |
| 3 Verdampferstufen | : | $68^{\circ}$ C bis $42^{\circ}$ C |

### Kühlung

| | | |
|---|---|---|
| | : | $18^{\circ}$ C |

### Konzentratbehandlung

| | | |
|---|---|---|
| Vorerhitzung | : | $90,5^{\circ}$ C / 3,5 Minuten |
| Homogenisierung | : | 125 bar / $75^{\circ}$ C |
| Hocherhitzung (Sterilisation) | : | $121,5^{\circ}$ C / 6 Minuten |
| Nachhomogenisierung | : | 45 bar / $74^{\circ}$ C |

Mit zunehmender Heißhaltung steigt die Viskosität an und mit zunehmender Viskosität wird die Flockenbildung geringer bzw. vermieden. Die Flockenbildung ist keine Koagulation der Lactoproteine, sondern eine lose Fett-Eiweißverbindung in Form von Schlieren, die sich aufgrund des spezifischen Gewichtes an der Oberfläche anlagern. Bei der nach den Versuchen hergestellten Kondensmilch zeigt sich bei Lagerung bei Raumtemperatur nach 14 Tagen eine Flockenbildung. Die Flocken lösen sich jedoch im Kaffee sofort auf.

Es versteht sich, daß die Erfindung grundsätzlich auch bei anders zusammengesetzter Kondensmilch zur Anwendung kommt.

So bezieht sich die Erfindung z.B. auch auf Kondensmilch mit 10 % Fett und 23 % fettfreier Trockenmasse.

**Patentansprüche**

1.  Verfahren zur Herstellung von Kondensmilch, vorzugsweise mit 7,5 % Fett und einer freien Trockenmasse von 17,5 % Fett, durch folgende Verfahrensschritte:
    1. Vorerhitzen der Ausgangsmilch auf eine Temperatur von 120° bis 130° C für eine Zeitdauer von 2 bis 8 Minuten, insbesondere 4 Minuten,
    2. Eindampfen der Ausgangsmilch,
    3. Homogenisieren der eingedampften Milch,
    4. Hocherhitzen der eingedampften Milch auf eine Temperatur von 120° bis 130° C für eine Zeitdauer von 4 bis 8 Minuten, insbesondere 6 Minuten,
    **dadurch gekennzeichnet,** daß die Homogenisierung der eingedampften Milch in zwei Stufen mit einem höheren Druck in der ersten Stufe erfolgt, wobei die Hocherhitzung erst nach der ersten Stufe erfolgt.

2.  Verfahren nach Anspruch 1,
    **dadurch gekennzeichnet,** daß der Druck in der ersten Stufe 100 bis 150 bar, insbesondere 120 bar, beträgt.

3.  Verfahren nach Anspruch 1 oder 2,
    **dadurch gekennzeichnet,** daß der Druck in der zweiten Stufe 40 bis 60 bar, insbesondere 50 bar, beträgt.

4.  Verfahren nach einem der Ansprüche 1 bis 3,
    **dadurch gekennzeichnet,** daß die eingedampfte Milch vor der ersten Stufe der Homogenisierung auf 90,5° C für eine Zeit von 3,5 Minuten erhitzt wird.

5.  Verwendung von nach einem oder mehreren der Ansprüche 1 bis 4 hergestellter Kondensmilch zur aseptischen Abfüllung in aus einem Kartonkunststoffmehrschichtverbund bestehende Packungen.

**Claims**

1.  A process for the preparation of condensed milk, preferably having 7.5% fat and a solid non-fat content of 17.5%, by the following process steps:
    1. preheating the initial milk to a temperature of 120° to 130°C for a duration of 2 to 8 minutes, more particularly 4 minutes,
    2. concentrating the initial milk,
    3. homogenizing the condensed milk,
    4. high-heating the condensed milk to a temperature of 120° to 130°C for a duration of 4 to 8 minutes, more particularly 6 minutes,
    characterized in that the condensed milk is homogenized in two stages with a higher pressure in the first stage, high-heating being performed only after the first stage.

2.  A process according to claim 1, characterized in that the pressure in the first stage is 100 to 150 bar, more particularly 120 bar.

3.  A process according to claims 1 or 2, characterized in that the pressure in the second stage is 40 to 60 bar, more particularly 50 bar.

4.  A process according to one of claims 1 to 3, characterized in that prior to the first stage of homogenization the condensed milk is heated to 90.5°C for a period of 3.5 minutes.

5. Use of condensed milk produced according to one or more of claims 1 to 4 for aseptic filling in packages consisting of a cardboard/plastics multi-layer composite.

**Revendications**

1. Procédé de fabrication de lait condensé, de préférence avec 7,5 % de matières grasses et une masse sèche libre avec 17,5 % de matières grasses, par les étapes procédurales suivantes :

   1. préchauffage du lait de départ à une température de 120° à 130°C pendant une durée de 2 à 8 minutes, en particulier 4 minutes,
   2. évaporation du lait de départ,
   3. homogénéisation du lait évaporé,
   4. chauffage à température élevée du lait évaporé à une température de 120° à 130°C pendant une durée de 4 à 8 minutes, en particulier 6 minutes,

   caractérisé en ce que l'homogénéisation du lait évaporé est effectuée en deux étapes avec une pression plus élevée dans la première étape, le chauffage à haute température n'ayant lieu qu'après la première étape.

2. Procédé selon la revendication 1,
   caractérisé en ce que la pression dans la première étape est de 100 à 150 bars, en particulier de 120 bars.

3. Procédé selon la revendication 1 ou 2,
   caractérisé en ce que la pression dans la seconde étape est de 40 à 60 bars, en particulier 50 bars.

4. Procédé selon l'une des revendications 1 à 3,
   caractérisé en ce que le lait évaporé est chauffé, avant la première étape d'homogénéisation, à 90,5°C pendant une durée de 3,5 minutes.

5. Utilisation de lait condensé fabriqué selon une ou plusieurs des revendications 1 à 4 pour la mise en récipient aseptique dans des emballages constitués d'un stratifié carton-matière synthétique.